## Europäisches Patentamt

## European Patent Office

## Office européen des brevets

(19)

(11) Numéro de publication: **0 090 724**
**B1**

(12) **FASCICULE DE BREVET EUROPÉEN**

(45) Date de publication du fascicule du brevet:
04.02.87

(51) Int. Cl.⁴: **G 02 B 6/38**

(21) Numéro de dépôt: **83400593.6**

(22) Date de dépôt: **22.03.83**

---

(54) Dispositif de raccordement de fibres optiques et procédé le mettant en oeuvre.

---

(30) Priorité: **30.03.82 FR 8205441**

(43) Date de publication de la demande:
**05.10.83 Bulletin 83/40**

(45) Mention de la délivrance du brevet:
**04.02.87 Bulletin 87/6**

(84) Etats contractants désignés:
**DE GB IT NL**

(56) Documents cité:
EP-A-0 021 871
WO-A-80/00619
GB-A-1 520 679
GB-A-2 009 440
US-A-3 885 859
US-A-4 102 561

IBM TECHNICAL DISCLOSURE BULLETIN, vol. 22,
no. 2, juillet 1979, pages 686-687, New York, USA,
R.T. EVANS et al.: "Optical fiber alignment tool"
ABSTRACT OF NEW TECHNOLOGY FROM THE AIR
FORCE SYSTEMS COMMAND, no. NTN-78/0446,
1978, USA, R.J. MORRISON: "Optical fiber holding
clamp"

(73) Titulaire: **SOCAPEX, 10 bis, quai Léon Blum,
F-92153 Suresnes (FR)**

(72) Inventeur: **Soster, Marie-Claude, THOMSON-CSF
SCPI 173, bld Haussmann, F-75379 Paris Cedex 08
(FR)**

(74) Mandataire: **Brullé, Jean, Service Brevets Bendix
44, rue François 1er, F-75008 Paris (FR)**

---

## Description

La présente invention a pour objet un dispositif de raccordement de fibres optiques.

Les fibres optiques de hautes performances (atténuation de l'ordre de quelques décibels par kilomètre) sont très sensibles aux contraintes. Ainsi, l'atténuation produite au niveau d'un raccordement peut être multiplié par un facteur pouvant aller environ jusqu'à 4 dû à l'apport de contraintes sur les fibres.

Il existe de nombreux dispositifs de raccordement de fibres optiques. On peut citer entre autres le dispositif décrit dans IBM Technical Disclosure Bulletin, volume 22, N°2, juillet 1979, pages 686-687, New-York, qui dispose d'une surface de référence possédant une rainure en V dans laquelle on dispose les fibres optiques à raccorder. Chacune de ces fibres optiques est maintenue en position par une bride de fixation disposant d'un élément en élastomère en forme de V également et qui sert à plaquer la fibre au fond de la rainure.

D'autres dispositifs ont été décrits dans les documents WO-A-8 000 619, US-A-3 885 859, GB-A-1 520 679 et EP-A- 0 021 871. D'après ces documents, le raccordement des fibres optiques est réalisé généralement de la même manière que précédemment, c'està-dire mise en place des fibres optiques dans une rainure en V et blocage par une bride de fixation.

La présente invention propose un dispositif de raccordement de fibres optiques permettant de minimiser l'apport de contraintes sur les fibres optiques au niveau du raccordement.

L'invention a donc pour objet un dispositif de raccordement d'au moins deux fibres optiques comprenant un support servant de surface de référence et comportant une rainure en forme de V destinée à recevoir lesdites fibres mises bout à bout, le dispositif comprenant également des moyens de positionnement desdites fibres dans la rainure qui comportent une région centrale élastiquement déformable et une région périphérique non déformable élastiquement, la région élastiquement déformable permettant de plaquer les fibres dans la rainure et la région périphérique permettant de rendre les moyens de positionnement solidaires du support par des moyens de fixation, la région périphérique servant de butée lors de sa fixation.

Dans une première variante de réalisation, les moyens de positionnement sont constitués d'une bride élastique comprenant un bloc central muni de logements recevant une plaquette élastiquement déformable et disposés de manière que celle-ci soit cambrée pour maintenir en place les fibres optiques sous l'action d'une force élastique d'intensité donnée.

Dans une seconde variante de réalisation, les moyens de positionnement sont constitués d'une bride élastique comprenant une plaquette élastiquement déformable et comportant deux portions latérales planes et une portion centrale cambrée pour maintenir en place les fibres optiques sous l'action d'une force élastique d'intensité donnée, ladite plaquette étant montée entre une première bride plate et un support completant la bride élastique.

Dans une troisième variante de réalisation, les moyens de positionnement sont constitués d'une bride élastique comportant deux rebords latéraux reliés entre eux à leurs extrémités et comportant dans leur partie centrale et sur une longueur donnée, une membrane élastiquement déformable comportant deux parois parallèles perpendiculaires aux rebords latéraux et se prolongeant par des parois inclinées convergentes reliées entre elles par une paroi plane destinée à venir s'appuyer contre les fibres optiques lorsque la bride élastique est montée pour les maintenir en place sous l'action d'une force élastique d'intensité donnée.

Dans une quatrième variante de réalisation, les moyens de positionnement sont constitués d'une bride élastique en matière plastique moulée affectant en coupe la forme générale d'un U dont les branches latérales se rejoignent par une paroi élastique et mince d'épaisseur déterminée pour maintenir en place les fibres optiques sous l'action d'une force élastique d'intensité donnée.

Le dispositif peut comporter une bride plate pour maintenir en place au moins une fibre optique située d'un côté du raccordement.

Le dispositif peut être constitué de pièces de contour extérieur cylindrique disposées dans un logement ménagé dans deux demi-coquilles.

Le procédé comporte une étape où on prépare des extrémités des fibres optiques à raccorder, une étape où on dispose au moins une première fibre optique sur la surface de référence, une étape où on dispose une deuxième fibre optique en regard de chaque première fibre optique, éventuellement une étape où on positionne la bride élastique sans serrage de manière à positionner les fibres optiques tout en laissant une liberté de déplacement en translation au moins à chaque deuxième fibre optique, une étape où on met en butée l'extrémité de chaque deuxième fibre optique contre l'extrémité de chaque première fibre optique et une étape où on serre en position la bride élastique.

L'invention sera mieux comprise à l'aide des exemples de réalisation donnés à titre non limitatif, conjointement avec les figures ci-annexées:

- la figure 1a représente en vue éclatée un premier mode de réalisation de l'invention,
- la figure 1b représente un détail de la figure 1a, à savoir un V de positionnement de fibres optiques,
- les figures 2a et 2b représentent respectivement en vue latérale et en coupe les brides de positionnement de fibres optiques suivant le mode de réalisation de la figure 1a,
- la figure 3 représente en vue latérale une variante de réalisation de la bride représentée à la figure 2b,
- la figure 4 représente en vue éclatée une autre variante de l'invention,

- les figures 5a et 5b, 6a et 6b représentent des détails et des pièces du mode de réalisation de la figure 4,
- la figure 7 représente en coupe un mode de réalisation de l'invention sous forme de connecteur,
- les figures 8a à 8d représentent des pièces de positionnement des fibres optiques du mode de réalisation de la figure 7,
- les figures 9a, 9b et 10 représentent un support présentant une pluralité de rainures en forme de V destinées à un raccordement d'une pluralité de fibres optiques,
- les figures 11a à 11c représentent une bride adaptée au raccordement d'une pluralité de fibres optiques.

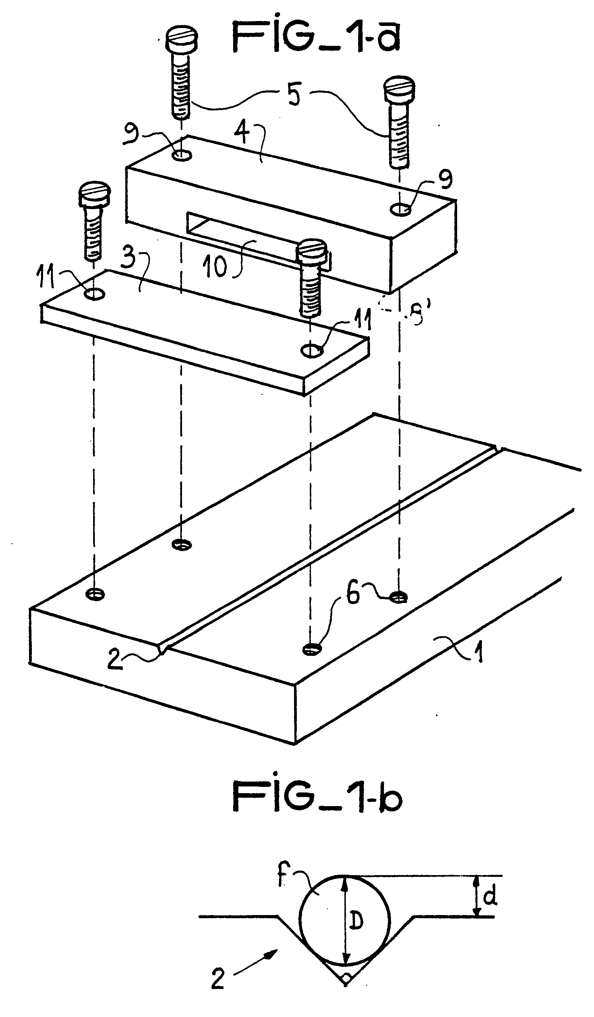

Selon la figure 1a, un support 1 est pourvu d'un V 2 de positionnement de fibres optiques. Le V est la forme optimale pour une surface de référence. En coupe, la fibre est maintenue centrée par contact géométrique avec deux points de référence. Le raccordement est obtenu grâce à une bride dite élastique 4 et éventuellement une bride 3 qui sont destinées à être vissées dans des taraudages 6 du support 1 grâce à des vis 5.

Selon la figure 1b, le V 2 de positionnement présente un angle de 90° entre ses parois et il est conçu de telle manière qu'une fibre de diamètre D dépasse de celui-ci d'une hauteur d donnée. Par exemple, pour une fibre de 125 microns d'épaisseur, le dépassement d choisi est situé dans une plage de 20 à 40 microns.

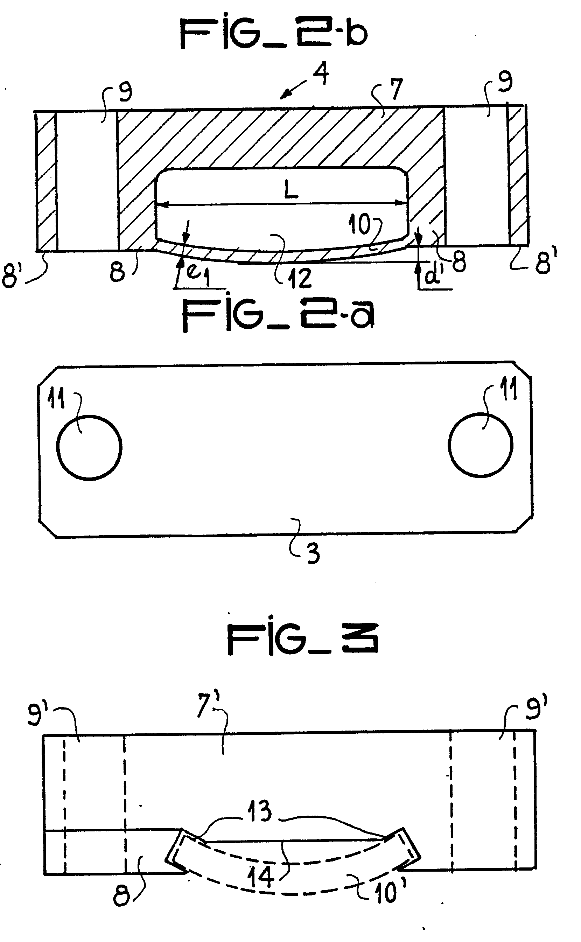

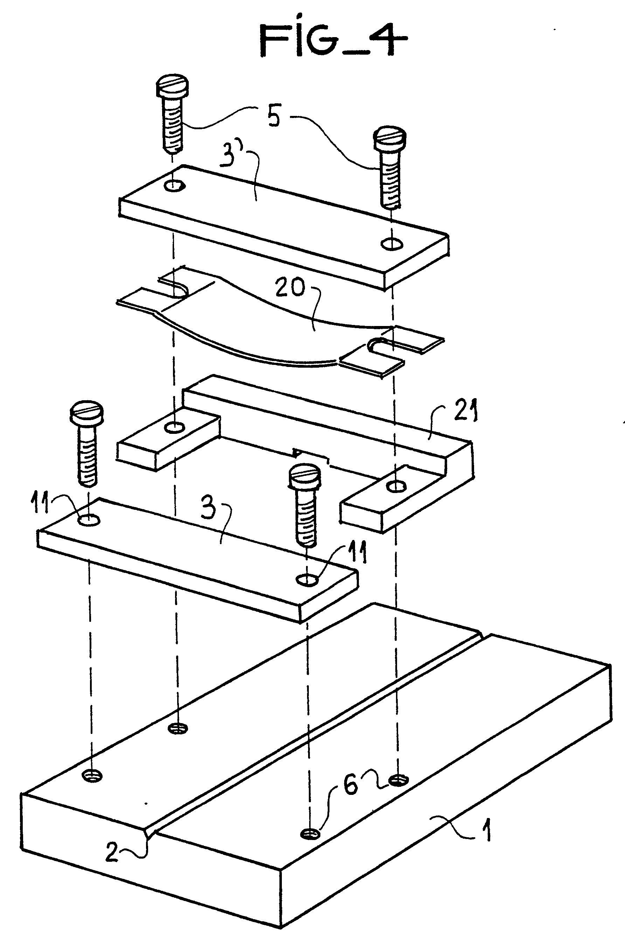

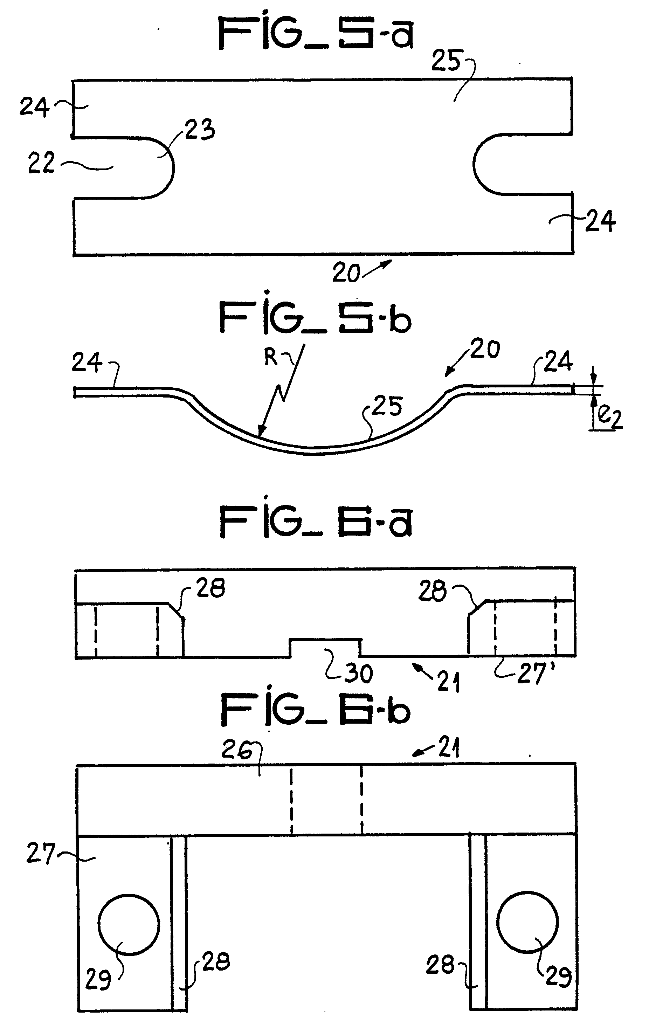

Suivant la figure 2a, la bride 3 se présente sous la forme d'une plaque plane pourvue de deux alésages 11. Selon la coupe de la figure 2b, la bride élastique 4 affecte en coupe la forme générale d'un U présentant une branche centrale 7 et deux branches latérales 8 alésées en 9. Les deux branches 8 du U se rejoignent par une paroi élastique et mince 10 de longueur L et d'épaisseur $e_1$. Cette paroi est cambrée vers l'extérieur et dépasse d'une distance d'des surfaces planes de référence constituées par les extré mités 8' des U.La forme cambrée de la paroi 10 permet de diriger les fibres au fond du V et d'éviter les chevauchements des fibres.

On va maintenant décrire une opération de raccordement de deux fibres optiques suivant ce mode de réalisation. La première opération consiste à préparer une des fibres optiques. Pour ce faire, on enlève sur une courte longueur à l'extrémité de celle-ci la gaine extérieure de protection, tout en conservant la gaine optique. La fibre ainsi préparée est positionnée dans le V repéré en 2 et elle est maintenue en position par serrage de la bride 3 à un niveau où la gaine n'a pas été enlevée. Comme la fibre est encore revêtue de sa gaine de protection mécanique, par exemple en époxy ou en silicone, le serrage de la bride 3 n'apporte pas de contraintes au niveau de la fibre proprement dite. Par ailleurs, la présence de la bride 3 facilite la mise en place du raccordement, puisqu'elle maintient en position la première fibre lors de la présentation de la deuxième fibre. On prépare ensuite l'extrémité de l'autre fibre et on la positionne dans le V 2 au voisinage de l'extrémité de la première fibre, avec interposition d'une goutte de liquide adaptateur d'indice. Le liquide adaptateur d'indice améliore l'atténuation du raccordement et facilite la manipulation. On met en place la bride élastique 4 sans serrage. Le positionnement de la bride élastique 4 sans serrage permet de plaquer la deuxième fibre au fond du V tout en laissant à celle-ci une liberté de déplacement en translation. On met ensuite en butée manuellement l'extrémité de la deuxième fibre contre l'extrémité de la première. Cette opération se fait facilement et correctement grâce au plaquage de la deuxième fibre procurée par la deuxième bride. On serre ensuite la bride 4 par vissage des vis 5 dans les taraudages 6. La bride plate peut être ultérieurement démontée. Lorsque la bride élastique 4 est vissée sur le support 1, les deux fibres optiques sont maintenues en position dans le V par une force de rappel élastique due à la déformation élastique de la paroi 10. Cette force s'exerce sur la partie dénudée des fibres, laquelle doit donc correspondre à la largeur de la bride élastique 4.

Comme des forces de contraintes appliquées transversalement aux fibres optiques seraient susceptibles de produire une atténuation, les paramètres qui définissent la paroi 10 sont choisis de telle manière que la force appliquée sur les fibres soit suffisamment faible pour ne pas produire de tels inconvénients.

A titre d'exemple, on a réalisé la bride élastique 4 en un polycarbonate non renforcé (par exemple marque MAKROLON de la Société BAYER). Il présente une densité de 1,2 à 1,24 et un module d'élasticité de 22 000 Kg/cm². Il est facilement moulable et possède une bonne résistance à la flexion et une bonne stabilité dimensionnelle. Dans cet exemple de réalisation, la longueur L de la paroi 10 est de 7 mm, son épaisseur $e_1$ de 0,35 m m environ, et le dépassement d', de l'ordre de 0,2 mm, pour une fibre optique de 125 microns de diamètre dépassant de 20 à 40 microns d'une rainure en forme de V (voir figure 2b).

Sur un banc de mesure, on a testé 50 raccordements réalisés comme ci-dessus à partir du clivage d'une fibre à gaine optique dure d'un câble et mise bout-à-bout des deux extrémités. Pour 46 de ceux-ci, l'atténuation dûe au raccordement était inférieure à 0,1 dB, c'est-à-dire pratiquement non mesurable.

Un tel raccordement peut donc être utilise comme réference pour un banc de test de l'atténuation des connecteurs.

De la description et de l'exemple ci-dessus, il ressort que la force exercée sur les fibres optiques situées dans le V ne dépend que des caractéristiques géométriques de la bride, de la fibre et du V. Elle est par contre indépendante de la force de serrage. En effet, les extrémités 8' des branches 8 du U viennent en butée sur la paroi plane du support 1 et tout serrage ultérieur des vis 5 ne transmet à la paroi 10 aucune force supplémentaire de compression.

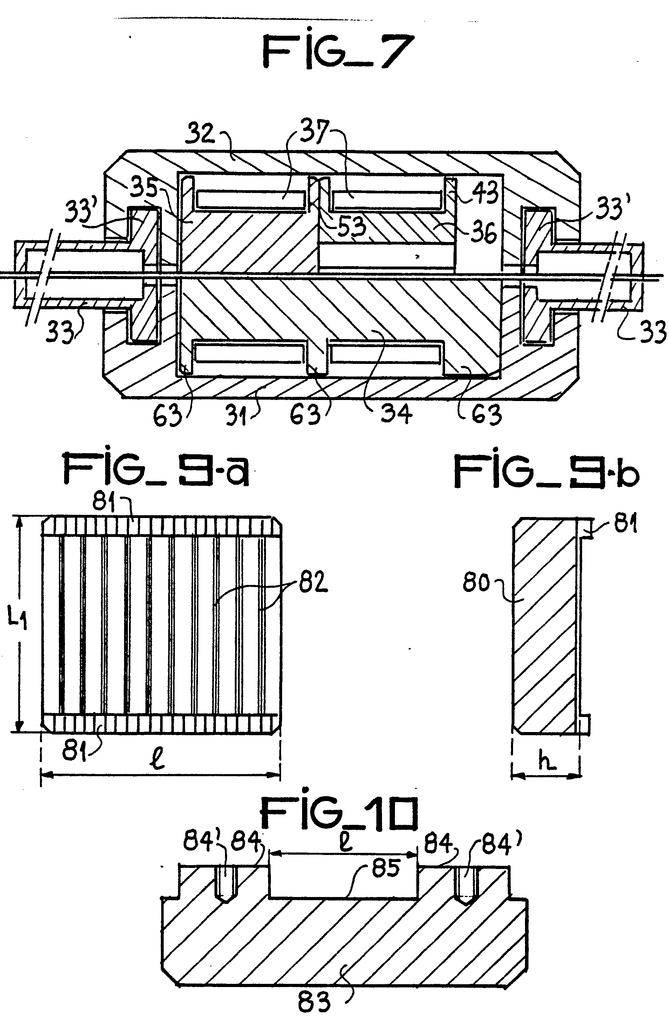

Selon la figure 3, la bride élastique présente un bloc central 7' et deux branches latérales 8 alésées en 9'. Les deux branches 8' sont séparées par une cavité comportant une partie centrale plane 14 et deux logements 13 destinés à recevoir une plaque élastique 10' qui joue le rôle de la paroi 10 de la figure 2b.

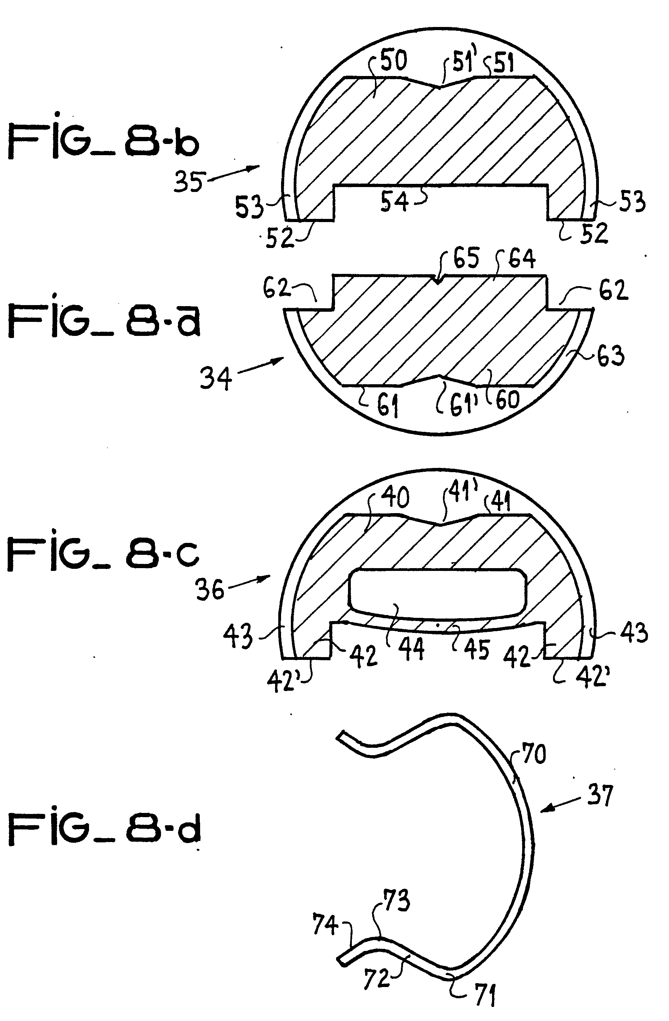

Selon la figure 4, la bride élastique est obtenue à partir d'une bride plate 3', et d'un support 21 entre lesquels est disposée une pièce élastique 20. L'ensemble est monté par vissage dans les taraudages 6 du support 1. Selon les figures 5a et 5b, qui représentent la pièce élastique 20 en vue de dessus et en vue latérale, celle-ci comporte deux portions latérales planes 24 ouvertes en 22 jusqu'à des arrondis 23 destinés à recevoir les vis 5 et une portion centrale cambrée 25 qui présente en vue latérale la forme d'un arc de cercle de rayon R. La pièce élastique 20 a une épaisseur $e_2$. Elle peut être métallique et obtenue par emboutissage d'une plaque d'acier.

A titre d'exemple, l'acier choisi est un acier à ressort en alliage Cu-Be, l'épaisseur $e_2$ est de 0,2 mm, et le dépassement par rapport à la partie inférieure de la bride 21 de 0,2 mm.

Selon les figures 6a et 6b qui représentent la bride 21 respectivement en vue latérale et de dessus, celle-ci affecte la forme d'un U dont la branche centrale 26 est plus épaisse que les deux branches latérales 27 de manière à positionner la pièce élastique 20. Les branches latérales 27 présentent chacune un alésage 29 et un chanfrein 28 situé du côté interne de chaque branche 27. Ce chanfrein 28 a pour but de laisser passer la zone de jonction entre la portion plane 24 et la portion cambrée 25 de la pièce élastique 20. Lorsque l'ensemble est monté, la portion cambrée 25 de la pièce élastique 20 dépasse d'une quantité donnée de la partie inférieure 27' de la bride 21. La force élastique d'appui sur les fibres optiques est ainsi déterminée par les caractéristiques mécaniques de l'ensemble comme dans le cas de la figure 1a. Par ailleurs, la réalisation du raccordement des fibres optiques met en oeuvre les mêmes étapes que dans le cas de la figure 1a.

La figure 7 représente un dispositif de raccordement selon l'invention sous la forme d'un connecteur optique. Il comporte un boîtier extérieur constitué par deux demi-coquilles 31 et 32 fixées entre elles par des vis non représentées. Les fibres gainées sont amenées à la partie active du connecteur par des brides présentant une partie cylindrique 33 se terminant par une partie de diamètre plus importante 33' qui est bloquée dans des logements correspondant des demi-coquilles 31 et 32. Un support 34 et des brides 35 et 36 sont emprisonnés entre les demi-coquilles, dans un logement cylindrique. Les brides 35 et 36 sont rendues solidaires du support 34 par des clips 37. Le support 34 s'étend sur toute la longueur du logement disponible entre les demi-coquilles 31 et 32.

La bride 34 (figure 8a) comporte un V 65 de positionnement des fibres, lequel est disposée sur sa face supérieure 64. La face supérieure 64 est bordée de deux entailles 62. Sa partie centrale 60 est de forme générale semi-circulaire, sauf à sa partie inférieure où elle présente un méplat 61 au centre duquel est ménagée une entaille 61' en forme de V destinée à recevoir une branche d'un clip 37. Le support 34 présente à ses extrémités, et éventuellement en son milieu une région cylindrique 63 de diamètre plus grand, lequel correspond au diamètre intérieur de la demi-coquille cylindrique 31.

La bride 35 (figure 8b), qui joue le rôle de la bride 3 de la figure 1a, comporte une face plane inférieure 52 dans laquelle est ménagée une rainure 54 dont la largeur correspond à celle de la surface supérieure 64 du support 34, la surface inférieure 52 venant par ailleurs en butée dans les entailles 62. La partie centrale de la bride 35 présente comme pour le support 34, un contour cylindrique et sa partie supérieure est constituée par un méplat 51 pourvu d'une entaille 51' en forme de V destinée à recevoir une branche dun clip 37. A chacune de ses extrémités, la bride 35 est pourvue d'un contour cylindrique 53, dont le diamètre plus grand que celui de la partie centrale 50 correspond au diamètre intérieur de la demi-coquille 32.

Selon la figure 8c, la bride élastique 36, qui remplit la fonction de la bride élastique 4 de la figure 1a, présente une face inférieure 45 constituée par une membrane élastique légèrement cambrée (voir la description de la membrane élastique 10 à la figure 2B). La membrane élastique 45 est bordée de deux rebords 42 présentant une surface plane inférieure 42'. Les rebords 42 sont espacés et dimensionnés de telle manière que les surfaces inférieures 42' viennent en butée au fond des entailles 62 du support 34. Ceci permet de positionner les fibres au niveau de leur raccordement dans le V 65 sans exercer sur elles de contraintes trop importantes, ainsi qu'il a été précédemment expliqué. La partie centrale 40 de la bride élastique 36 a un contour généralement cylindrique sauf à sa partie supérieure, laquelle présente un méplat 41 dans lequel est ménagée une entaille 41' permettant de recevoir une branche d'un clip 37. La partie centrale 40 présente à sa partie inférieure une cavité 44 qui borde la membrane élastique 45. A chacune des extrémités de la bride élastique 36, est ménagé un contour cylindrique 43 dont le diamètre extérieur plus grand que celui de la partie centrale 40, correspond au diamètre intérieur de la demi-coquille 32.

Le raccordement de deux fibres optiques met en oeuvre les mêmes opérations que dans le cas des modes de réalisation précédents, les brides 35 et 36 étant fixées sur le support 34 grâce à un clip 37 représenté à la figure 8d. Celui-ci présente une portion centrale 70 recourbée selon un diamètre correspondant à celui des parties centrales 40, 50 et 60. La partie centrale 70 présente de chaque côté un coude 71 qui se prolonge par une partie droite 72 dirigée vers l'intérieur. Chaque partie droite 72 se prolonge par un coude 73 et une portion terminale 74 dirigée vers l'extérieur, l'ensemble 72, 73 et 74 étant destiné à venir se loger dans les entailles en forme de V 41', 51' et 61'.

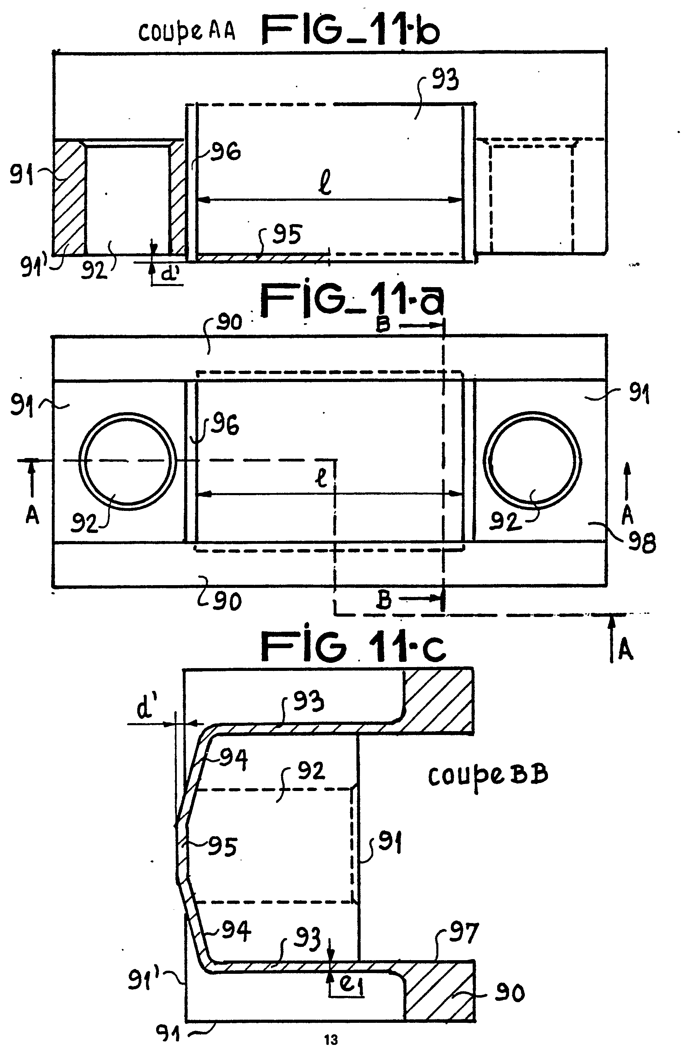

Les figures 9a et 9b représentent respectivement en vue de dessus et en coupe un élément de support pour fibre optique destine à un raccordement multiple et comporte un bloc 80 de largeur 1 et de longueur $L_1$ à la surface supérieure duquel sont ménagées des rainures 82 en forme de V bordées à chaque extrémité par des rainures 81 également en forme de V mais de dimension plus importante de manière à faciliter la présentation des fibres optiques. Cet élément de support est destiné à être inséré dans un support central représenté en coupe à la figure 10. Celui-ci comporte un bloc 83 présentant une surface supérieure plane 84 dans laquelle est ménagée une rainure 85 dont la largeur 1 correspond à celle de l'élément de support précédemment décrit. La surface supérieure 84 comporte également des taraudages 84' destinés à la fixation de la ou des brides du dispositif de raccordement.

Les figures 11a à 11c représentent respectivement en vue de dessus, en coupe AA et en coupe BB un mode de réalisation dune bride élastique destinée à être montée sur le support décrit à la figure 10.

La bride élastique comporte deux rebords latéraux 90. Ceux-ci sont reliés entre eux à chacune de leurs extrémités par des sections 91 de forme rectangulaire dans lesquelles sont ménagés des alésages 92. Ces sections 91 ne s'étendent pas jusqu'à la surface supérieure des rebords latéraux 90 afin de laisser un espace disponible pour les têtes de vis dans les alésages 92. Dans la partie centrale des rebords latéraux 90, et sur une longueur 1 est disposée une membrane élastiquement déformable qui s'étend depuis un rebord 90 jusqu'à l'autre. Celle-ci se compose de deux parois parallèles 93 dont chacune prolonge vers le bas les rebords latéraux 90. Les parois verticales 93 se prolongent par des parois inclinées convergentes 94 qui sont reliées entre elles par une portion plane 95. Cette portion 95 est disposée de telle manière qu'elle dépasse d'une distance d' du plan inférieur 91' des sections 91. De cette manière, lorsque la bride élastique est montée sur le support 83, par montage des vis dans les taraudages 84' à travers les alésages 92, la portion plane 95 vient appuyer les fibres optiques dans les rainures 82 sur toute la longueur 1.

Le raccordement est avantageusement effectué de la manière suivante. Les fibres à l'extrémité de deux câbles à raccorder sont montées en position sur un support latéral (non représenté) et pourvu de rainures en forme de V présentant le même écartement que celles du support central. Elles sont préparées grâce à un outillage de cassure collective de fibres optiques tel que décrit dans la demande de brevet français 80 16 917 déposée le 31 juillet 1980 par la Demanderesse. Chaque support latéral est réalisé de telle manière que les fibres en dépassent après cassure d'une quantité

$$\frac{L_1}{2}$$

déterminée avec précision. Les supports latéraux sont alors montés de chaque côté du bloc 83 du support central. Les fibres optiques sont alors positionnées en face les unes des autres. Il ne reste plus qu'à monter la bride élastique (figures 11a à 11c) avec interposition eventuelle d'un liquide d'indice.

La bride élastique représentée sur les figures 11a à 11c peut être réalisée par moulage. A titre d'exemple, la matière est un polycarbonate non chargé (marque MAKROLON de la Société BAYER). La membrane élastique a une longueur 1 égale à 11 mm, une épaisseur $e_1$ constante égale à 0,3 mm, la portion 95 a une largeur de 1,5 mm pour un écartement de 7 mm entre les parois latérales 93, et le dépassement d'est égal à 0,2 mm pour des fibres optiques de 125 microns de diamètre et dépassant de 20 à 40 microns des rainures en forme de V.

La description ci-dessus met en évidence l'avantage particulier que présente la mise en oeuvre d'une bride élastique comportant une région centrale élastiquoment déformable et une région périphérique non déformable élastiquement et qui sert de butée lors du serrage de la bride élastique. Dans un premier temps, le serrage de la bride est élastique et la force d'appui est suffisante pour interdire tout mouvement d'une fibre à l'autre sans engendrer de contraintes susceptibles d'altérer la qualité de la transmission. Dans un second temps, le serrage de la bride est dynamométrique et la force d'appui sur les fibres reste constante de telle sorte que la qualité de la transmission par les fibres reste inaltérée.

L'invention ne se limite pas aux modes de réalisation explicitement décrits et exemplifiés. Ainsi, on peut utiliser d'autres matériaux pour réaliser les brides et notamment les brides élastiques. En effet, tous les matériaux élastiques présentant de bonnes propriétés mécaniques peuvent être utilisés. Pour obtenir des forces de pression comparables a celles des exemples mentionnés ci-dessus, il suffit d'adapter les dimensions des parois élastiques en tenant compte du module d'élasticité du matériau utilisé.

## Revendications

1. Dispositif de raccordement d'au moins une première et une seconde fibre optique, comprenant un support (1) servant de surface de référence et comportant une rainure (2) en forme de V destinée à recevoir lesdites fibres mises bout à bout, le dispositif comprenant également des moyens de positionnement desdites fibres dans la rainure qui comportent une region centrale élastiquement déformable et une région périphérique non déformable élastiquement, la région élastiquement déformable permettant de plaquer les fibres dans la rainure et la région périphérique permettant de rendre les moyens de positionnement solidaires du support par des moyens de fixation, la région périphérique (8) servant de butée lors de sa fixation, caractérisé en ce que les moyens de positionnement sont constitués d'une bride élastique comprenant un bloc central (7') muni de logements (13) recevant une plaquette élastiquement déformable (10') et disposés de manière que celle-ci soit cambrée pour maintenir en place les fibres optiques sous l'action d'une force élastique d'intensité donnee.

2. Dispositif de raccordement d'au moins une première et une seconde fibre optique comprenant un support (1) servant de surface de référence et comportant une rainure (2) en forme de V destinée à recevoir lesdites fibres mises bout à bout, le dispositif comprenant également des moyens de positionnement desdites fibres dans la rainure qui comportent une région centrale élastiquement déformable et une région périphérique non déformable élastiquement, la région élastiquement déformable permettant de plaquer les fibres dans la rainure et la région périphérique permettant de rendre les moyens de positionnement solidaire du support par des moyens de fixation, la région périphérique servant de butée lors de sa fixation, caractérisé en ce que les moyens de positionnement sont constitués d'une bride élastique comprenant une plaquette (20) élastiquement déformable et comportant deux portions latérales (24) planes et une portion centrale (25) cambrée pour maintenir en place les fibres optiques sous l'action d'une force élastique d'intensité donnée, ladite plaquette étant montée entre une première bride plate (3') et un support (21) complétant la bride élastique.

3. Dispositif de raccordement d'au moins une première et une seconde fibre optique, comprenant un support (1) servant de surface de référence et comportant une rainure (2) en forme de V destinée à recevoir lesdites fibres mises bout à bout, le dispositif comprenant également des moyens de positionnement desdites fibres dans la rainure qui comportent une région centrale élastiquement déformable et une région périphérique non déformable élastiquement, la région élastiquement déformable permettant de plaquer les fibres dans la rainure et la région périphérique permettant de rendre les moyens de positionnement solidires au support par des moyens de fixation, la région périphérique (91) servant de butée lors de sa fixation, caractérisé en ce que les moyens de positionnement sont constitués d'une bride élastique comportant deux rebords latéraux (90) reliés entre eux à leurs extremités et comportant dans leur partie centrale et sur une longueur donnée 1, une membrane élastiquement déformable comportant deux parois parallèles (93) perpendiculaires aux rebords latéraux et se prolongeant par des parois inclinées convergentes (94) reliées entre elles par une paroi plane (95) destinée à venir s'appuyer contre les fibres optiques lorsque la bride élastique est montée pour les maintenir en place sous l'action d'une force élastique d'intensité donnée.

4. Dispositif de raccordement d'au moins une première et une seconde fibre optique comprenant un support (1) servant de surface de référence et comportant une rainure (2) en forme de V destinée à recevoir lesdites fibres mises bout à bout, le dispositif comprenant également des moyens de positionnement desdites fibres dans la rainure qui comportent une région centrale élastiquement déformable et une région périphérique non déformable élastiquement, la région élastiquement déformable permettant de plaquer les fibres dans la rainure et la région périphérique permettant de rendre les moyens de positionnement solidaires du support par des moyens de fixation, la région périphérique (8) servant de butée lors de sa fixation, caractérisé en ce que les moyens de positionnement sont constitués d'une bride élastique (4) en matière plastique moulée affectant en coupe la forme générale d'un U (7, 8) dont les branches latérales se rejoignent par une paroi (10) élastique et mince d'épaisseur déterminée ($e_1$) pour maintenir en place les fibres optiques sous l'action d'une force élastique d'intensité donnée.

5. Dispositif selon l'une des revendications précédentes, caractérisé en ce qu'il comporte une seconde bride plate (3) pour maintenir en place au moins une fibre optique située d'un côté du raccordement.

6. Dispositif selon l'une des revendications précédentes, caractérisé en ce que le support (34) servant de surface de référence et lesdits moyens de positionnement (35, 36) sont des pièces possédant un contour extérieur cylindrique disposées dans un logement dans deux demi-coquilles (31, 32).

7. Procédé de mise en oeuvre du dispositif selon l'une quelconque des revendications 1 à 6, caractérisé en ce qu'il comporte les étapes suivantes:
- dénudage de la gaine de protection des fibres optiques à raccorder, sur une longueur détérminee,
- positionnement de la première et de la seconde fibre optique dans la rainure en V (2), l'extrémité de l'une étant disposée au voisinage de l'extrémité de l'autre,
- mise en butée desdites fibres
- et serrage de la bride élastique (4) sur le support (1).

8. Procédé selon la revendication 7, caractérisé en ce qu'il comporte en outre une étape consistant, avant l'étape de mise en butée des fibres, à installer la bride élastique (4) sur le support (1) de manière à plaquer les fibres au fond de la rainure (2) tout en laissant une liberté de déplacement en translation à au moins l'une
des fibres optiques à raccorder.

## Patentansprüche

1. Vorrichtung zum Verbinden mindestens einer
ersten und einer zweiten optischen Faser, mit
einem Grundkörper (1), der als Bezugsfläche
dient und eine V-förmige Nut (2) aufweist, die zur
Aufnahme der stumpf aneinander anliegenden
Fasern dient, wobei die Vorrichtung versehen ist
mit Positionierungsmitteln zum Positionieren der
Fasern in der Nut, welche einen elastisch
verformbaren zentralen Bereich und einen nicht
elastisch verformbaren Außenbereich aufweisen,
wobei der elastisch verformbare Bereich die
Positionierung der Fasern in der Nut erlauben und
der Außenbereich (8) die Befestigung der
Positionierungsmittel am Grundkörper durch
Befestigungsmittel erlaubt, wobei der
Außenbereich als Anschlag bei seiner
Befestigung dient, dadurch gekennzeichnet, daß
die Positionierungsmittel von einem elastischen
Bügel gebildet werden, der einen zentralen Block
(7') mit Aufnahmesätzen (13) aufweist, die eine
elastisch verformbare Platte (10') aufnehmen und
so angeordnet sind, daß diese gewölbt wird, um
die optischen Fasern unter der Wirkung einer
elastischen Kraft vorgegebener Stärke an Ort und
Stelle zu halten.

2.Vorrichtung zum Verbinden mindestens einer
ersten und einer zweiten optischen Faser, mit
einem Grundkörper (1), der als Bezugsfläche
dient und eine V-förmige Nut (2) aufweist, die zur
Aufnahme der stumpf aneinander anliegenden
Fasern dient, wobei die Vorrichtung versehen ist
mit Positionierungsmitteln zum Positionieren der
Fasern in der Nut, welche einen elastisch
verformbaren zentralen Bereich und einen nicht
elastisch verformbaren Außenbereich aufweisen,
wobei der elastisch verformbare Bereich die
Positionierung der Fasern in der Nut erlauben und
der Außenbereich die Befestigung der
Positionierungsmittel am Grundkörper durch
Befestigungsmittel erlaubt, wobei der
Außenbereich als Anschlag bei seiner
Befestigung dient, dadurch gekennzeichnet, daß
die Positionierungsmittel von einem elastischen
Bügel in Form einer Platte (20) gebildet werden,
die elastisch verformbar ist und zwei ebene
seitliche Abschnitte (24) und einen gewölbten
zentralen Abschnitt (26) aufweist, um die
optischen Fasern unter der Wirkung einer
elastischen Kraft voregebener Stärke an Ort und
Stelle zu halten, wobei die latte zwischen einem
ersten plattenförmigen Teil (3') und einem Träger
(21) angebracht ist, der den elastischen Bügel
vervollständigt.

3. Vorrichtung zum Verbinden mindestens einer
ersten und einer zweiten optischen Faser, mit
einem Grundkörper (1), der als Bezugsfläche
dient und eine V-förmige Nut (2) aufweist, die zur
Aufnahme der stumpf aneinander anliegenden Fasern dient, wobei die Vorrichtung versehen ist
mit Positionierungsmitteln zum Positionieren der
Fasern in der Nut, welche einen elastisch
verformbaren zentralen Bereich und einen nicht
elastisch verformbaren Außenbereich aufweisen,
wobei der elastisch verformbare Bereich die
Positionierung der Fasern in der Nut erlauben und
der Außenbereich die Befestigung der
positionierungsmittel am Grundkörper durch
Befestigungsmittel erlaubt, wobei der
Außenbereich (91) als Anschlag bei seiner
Befestigung dient, dadurch gekennzeichnet, daß
die Positionierungsmittel von einem elastischen
Bügel gebildet werden, der zwei seitliche
Ansätze (90) aufweist, die an ihren Enden
miteinander verbunden sind und in ihrem
zentralen Abschnitt sowie über eine vorgegebene
Länge (1) eine elastisch verformbare Membran
aufweisen, die zwei senkrecht zu den seitlichen
Ansätzen und parallel zueinander verlaufende
Wände (93) besitzt und von zwei geneigten,
konvergierend verlaufenden Wänden (94)
verlängert wird, die untereinander von einer
ebenen Wand (95) verbunden werden, welche
sich an die optischen Fasern anlegt, wenn der
elastische Bügel montiert ist, um sie unter der
Wirkung einer elastischen Kraft vorgegebener
Stärke an Ort und Stelle zu halten.

4. Vorrichtung zum Verbinden mindestens einer
ersten und einer zweiten optischen Faser, mit
einem Grundkörper (1), der als Bezugsfläche
dient und eine V-förmige Nut (2) aufweist, die zur
Aufnahme der stumpf aneinander anliegenden
Fasern dient, wobei die Vorrichtung versehen ist
mit Positionierungsmitteln zum Positionieren der
Fasern in der Nut, welche einen elastisch
verformbaren zentralen Bereich und einen nicht
elastisch verformbaren Außenbereich aufweisen,
wobei der elastisch verformbare Bereich (8) die
Positionierung der Fasern in der Nut erlauben und
der Außenbereich die Befestigung er
Positionierungsmittel am Grundkörper durch
Befestigungsmittel erlaubt, wobei der
Außenbereich als Anschlag bei seiner
Befestigung dient, dadurch gekennzeichnet, daß
die Positionierungsmittel von einem elastischen
Bügel (4) aus gegossenem Kunststoff gebildet
werden, der im Querschnitt ungefähr die Form
eines U (7,8) hat, dessen seitliche Schenkel durch
eine elastische Wand (10) einer vorgegebenen
geringen Wandstärke ($e_1$) verbunden sind, um die
optischen Fasern unter der Wirkung einer
elastischen Kraft vorgegebener Stärke an Ort und
Stelle zuhalten.

5. Vorrichtung nach einem der vorhergehenden
Ansprüche, gekennzeichnet durch einen zweiten
plattenförmigen Bügel (3), der mindestens eine
optische Faser auf einer Anschlußseite an Ort
und Stelle hält.

6. Vorrichtung nach einem der vorhergehenden
Ansprüche, dadurch gekennzeichnet, daß der
Grundkörper (34), der als Bezugsfläche dient,
sowie die Positionierungsmittel (35, 36) Teile mit
einer zylindrischen Außenkontur sind, die in
einem Aufnahmesitz in zwei Halbschalen (31, 32) angeordnet sind.

7. Verfahren zum Benutzen der Vorrichtung nach einem der Ansprüche 1-6, dadurch gekennzeichnet, daß es folgende Schritte umfaßt:

Entfernen der Schutzhülle der zu verbindenden optischen Fasern über einer vorgegebenen Länge, Positionieren der ersten und zweiten optischen Faser in der V-förmigen Nut (2), wobei das Ende der einen Faser benachbart zum Ende der anderen Faser angeordnet wird, stumpfes Aneinanderlegen der Fasern, und Festspannen des elastischen Bügels (4) am Grundkörper (1).

8. Verfahren nach Anspruch 7, dadurch gekennzeichnet, daß es einen weiteren Schritt umfaßt, der darin besteht, daß vor dem stumpfen Aneinanderlegen der Fasern der elastische Bügel (4) auf dem Grundkörper (1) so angebracht wird, daß von den am Boden der Nut (2) angeordneten Fasern mindestenseine der Fasern translationsförmig verschiebbar bleibt.

## Claims

1. Apparatus for joining at least one first optical fibre and one second optical fibre, comprising a support (1) serving as a reference surface and comprising a V-shaped groove (2) adapted to receive said fibres in an abutting relationship, the apparatus further comprising means for positioning said fibres in the groove, which include a resiliently deformable central region and a not resiliently deformable peripheral region permitting to fixedly connect the positioning means to the support by fixing means, the peripheral region (8) serving as abutment when it is being fixed, characterized in that the positioning means are comprised of a resilient buckle comprising a central block (7') provided with seats (13) receiving a resiliently deformable plate (10') and disposed such that the latter be cambered for maintaining the optical fibres in place under the action of a resilient force of a predetermined value.

2. Apparatus for joining at least one first optical fibre and one second optical fibre, comprising a support (1) serving as a reference surface and comprising a V-shaped groove (2) adapted to receive said fibres in an abutting relationship, the apparatus further comprising means for positioning said fibres in the groove, which include a resiliently deformable central region and a not resiliently deformable peripheral region permitting to fixedly connect the positioning means to the support by fixing means, the peripheral region serving as abutment when it is being fixed, characterized in that the positioning means are comprised of a resilient buckle comprising a plate (20) which is resiliently deformable and includes two plane lateral portions (24) and a cambered central portion (25) for maintaining the optical fibres in place under the action of a resilient force of predetermined value, said plate being mounted between a first plate-like buckle (3') and a support (21) completing the resilient buckle.

3. Apparatus for joining at least one first optical fibre and one second optical fibre, comprising a support (1) serving as a reference surface and comprising a V-shaped groove (2) adapted to receive said fibres in an abutting relationship, the apparatus further comprising means for positioning said fibres in the groove, which include a resiliently deformable central region and a not resiliently deformable peripheral region permitting to fixedly connect the positioning means to the support by fixing means, the peripheral region (91) serving as abutment when it is being fixed, characterized in that the positioning means are comprised of a resilient buckle comprising two lateral lugs (90) connected to each other at their ends and comprising, at their central portion and along a predetermined length (1) a resiliently deformable membrane comprising two parallel walls (93) perpendicular to the lateral lugs and extended by converging inclined walls (94) connected to each other by a plane wall (95) adapted to engage the optical fibres when the resilient buckle is mounted to maintain them in place under the action of a resilient force of a predetermined value.

4. Appratus for joining at least one first optical fibre and one second optical fibre, comprising a support (1) serving as a reference surface and comprising a V-shaped groove (2) adapted to receive said fibres in an abutting relationship, the apparatus further comprising means for positioning said fibres in the groove, which include a resiliently deformable central region and a not resiliently deformable peripheral region permitting to fixedly connect the positioning means to the support by fixing means, the peripheral region (8) serving as abutment when it is being fixed, characterized in that the positioning means are comprised of a resilient buckle (4) of molded plastic material having a cross-section of U-shape, the lateral legs of the U being joined by a resilient wall (10) of a predetermined small thickness $(e_1)$ for maintaining the optical fibres in place under the action of a resilient force of a predetermined value.

5. Apparatus according to any of the preceding claims, characterized in that it comprises a second plate-like buckle (3) for maintaining the optical fibres on one coupling side in place.

6. Apparatus according to any of the preceding claims, characterized in that the support (34) serving as a reference surface and said positioning means (35, 36) are members having a cylindrical external contour and disposed at a seat within two half shells (31, 32).

7. A method of putting into use the apparatus of any of claims 1 to 6, characterized in that it comprises the following steps:

removing the protection sleeve from the opticle fibres to be joined along a predetermined length, positioning the first and second opticle fibres in the V-shaped groove (2), the end of one of the fibres being disposed adjacent the end of the other fibre, placing said fibres into abutting relationship, and locking the resilient buckle (4) on the support (1).

8. The method of claim 7, characterized in that it further comprises a step which consists of placing the resilient buckle (4) on the support (1), prior to the step of placing the fibres into abutting relationship, such as to position the fibres at the bottom of the groove (2) while allowing for translational displacement of at least one of the optical fibres to be joined.

0 090 724

# FIG_1-a

# FIG_1-b

0 090 724

FIG_2·b

FIG_2·a

FIG_3

3

# FIG_4

## FIG_5-a

24

22

23

25

24

20

## FIG_5-b

24

R

20

24

25

$e_2$

## FIG_6-a

28

28

30

21

27'

## FIG_6-b

26

21

27

29

28

28

29

# FIG_7

32 37
35 43
33' 53 36 33'
33 33
63 31 63 34 63

# FIG_9-a

81
82
L₁
81 ℓ

# FIG_9-b

81
80
h

# FIG_10

84' 84 ℓ 84 84'
85
83

FIG_8·b

FIG_8·a

FIG_8·c

FIG_8·d

0 090 724

coupe AA    FIG_11·b

FIG_11·a

FIG_11·c

coupe BB

13